(19) Europäisches Patentamt
European Patent Office
Office européen des brevets

(11) Veröffentlichungsnummer: **0 409 035 B1**

(12) **EUROPÄISCHE PATENTSCHRIFT**

(45) Veröffentlichungstag der Patentschrift: **08.06.94**

(21) Anmeldenummer: **90113070.8**

(22) Anmeldetag: **09.07.90**

(51) Int. Cl.5: **C08G 18/42**, C08J 9/00, C08L 75/06, C08L 71/02, C08L 83/12, //(C08G18/42, 101:00),(C08J9/00,C08L75:06, 71:02,83:12)

(54) **Verfahren zur Herstellung von flexiblen Polyesterpolyurethanschäumen.**

(30) Priorität: **20.07.89 DE 3924082**

(43) Veröffentlichungstag der Anmeldung:
**23.01.91 Patentblatt 91/04**

(45) Bekanntmachung des Hinweises auf die Patenterteilung:
**08.06.94 Patentblatt 94/23**

(84) Benannte Vertragsstaaten:
**BE DE FR GB NL**

(56) Entgegenhaltungen:
**EP-A- 0 152 878**
**EP-A- 0 293 125**
**BE-A- 694 018**
**DE-A- 1 694 432**
**DE-A- 1 795 588**
**DE-A- 1 813 198**
**DE-A- 3 339 068**

(73) Patentinhaber: **Th. Goldschmidt AG**
**Goldschmidtstrasse 100**
**D-45127 Essen(DE)**

(72) Erfinder: **Möhring, Volker, Dr.**
**Von-Bock-Strasse 59**
**D-4330 Mülheim/Ruhr(DE)**
Erfinder: **Zellmer, Volker, Dr.**
**Horster Strasse 177**
**D-4250 Bottrop(DE)**
Erfinder: **Burkhart, Georg, Dr.**
**Barkhovenallee 31**
**D-4300 Essen 16(DE)**
Erfinder: **Fock, Jürgen, Dr.**
**Mörsenbroicher Weg 114**
**D-4000 Düsseldorf 30(DE)**
Erfinder: **Schlöns, Hans-Heinrich**
**Haverkamp 29a**
**D-4300 Essen 17(DE)**

**EP 0 409 035 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von flexiblen Polyesterpolyurethanschäumen durch Umsetzung von mindestens difunktionellen Polyesterolen mit mindestens difunktionellen organischen Isocyanaten in Gegenwart von Katalysatoren und eines Stabilisatorgemisches aus organischen und siliciumorganischen Verbindungen, Wasser, gegebenenfalls Treibmitteln und gegebenenfalls üblichen Zusatzmitteln.

Die Erfindung betrifft insbesondere die Auswahl eines besonders geeigneten Stabilisatorgemisches für die Herstellung flexibler Polyesterpolyurethanschäume.

Grundsätzlich kommen nach dem Stand der Technik folgende Stabilisatortypen in Frage:

Organische Tenside:

Rein organische Tenside sind aufgrund ihres schwachen Stabilisierungsvermögens eher als Emulgatoren denn als Stabilisatoren im ursprünglichen Sinn zu betrachten. Sie übernehmen daher in erster Linie die Aufgabe der Nukleierung, was zu den im Esterschaum in der Regel angestrebten feinen und regelmäßigen Zellen führt. Außerdem bedient man sich ihrer, wenn ein Verkleben der Kanten von aus Polyurethanschäumen gefertigten Formteilen beim Ausstanzen vermieden werden soll.

Aufgrund der geringen stabilisierenden Wirkung der organischen Tenside ist mit ihnen die Herstellung von Polyesterurethanschäumen mit relative geringem Raumgewicht (z.B. < 25 kg/$m^3$) nahezu unmöglich. Mit sinkendem Raumgewicht beobachtet man unregelmäßige Zellstrukturen sowie mangelndes Vermögen, das Treibgas zu halten, und damit starken Rückfall der Schäume.

Es ist außerdem schwierig, diese Schaumstoffe im hohen Raumgewichtsbereich (z.B. > 60 kg/$m^3$) ohne unerwünschtes Schrumpfen mit rein organischen Tensiden herzustellen. Beispiele für derartige Produkte sind anionaktive Tenside, wie die Salze von Fettsäuren, sulfonierten Fettsäuren oder sulfatierten Fettalkoholen sowie nichtionische Tenside, wie die Oxalkylierungsprodukte von Fettalkoholen oder Alkylphenolen.

Polyethersiloxan-Copolymere:

Wie von anderen Polyurethanschäumen, z.B. flexiblen Polyetherpolyurethanschäumen bekannt, besitzen Polyoxyalkylen-Polysiloxan-Blockmischpolymerisate ausgeprägt stabilisierende Eigenschaften, was umso mehr an Bedeutung erlangt, je niedriger das angestrebte Raumgewicht ist. Die Verwendung derartiger Polyoxyalkylen-Polysiloxan-Blockmischpolymerisate allein erlaubt daher die Herstellung von Schäumen ohne nennenswerten Gasverlust und Rücksacken bei gleichzeitig guter Raumgewichtsverteilung.

Allerdings erhält man wegen des geringen Emulgiervermögens bei der Verwendung von Polyoxyalkylen-Polysiloxan-Blockmischpolymerisaten als alleinige Stabilisatorkomponenten im Esterschaum eine nur unzureichende Nukleierung, was sich in einer stark vergröberten und unregelmäßigen Schaumstruktur niederschlägt.

Aufgrund der stabilisierenden Eigenschaften und damit der Tendenz zur Geschlossenzelligkeit (Schrumpf) wird im Esterschaum die Produktion hoher Raumgewichte erschwert.

Auch kommt erschwerend hinzu, daß im Gegensatz zu den rein organischen Tensiden bei der Verwendung von Polyoxyalkylen-Polysiloxan-Blockmischpolymerisaten keine stanzbaren Esterschäume ohne Verkleben der Kanten erhalten werden können.

Stabilisatorgemische:

Entsprechend dem Stand der Technik werden deshalb als Stabilisatoren bei der Herstellung flexibler Polyesterpolyurethanschäume vorzugsweise Mischungen von Polyoxyalkylen-Polysiloxan-Blockmischpolymerisaten und organischen Tensiden verwendet, da nur derartige Mischungen innerhalb eines gewissen Rahmens universell verwendbar sind.

Derartige Stabilisatorgemische sind in einer Vielzahl von Offenlegungs- oder Patentschriften beschrieben. Gegenstand der DE-OS 18 13 198 ist ein Verfahren zur Herstellung flexibler Polyesterurethanschaumstoffe mit dem Kennzeichen, daß man als oberflächenaktiven Stabilisator eine kleine Menge eines anionischen organischen Schaumstabilisators, der bei Raumtemperatur im Polyesterharz löslich ist und die Oberflächenspannung des Polyesterharzes um wenigstens 5 dyn je cm senkt, wenn er darin gelöst ist, und der weder ein wasserunlösliches Sulfonat noch eine wasserunlösliche Sulfonsäure ist, zusammen mit einer kleinen Menge eines schaumstabilisierenden Siloxan-Polyoxyalkylen-Blockmischpolymerisats mit einem Molekulargewicht von 600 bis 17 000, einem Siloxangehalt von 14 bis 40 Gew.-%, bezogen auf das Gewicht des Blockmischpolymerisats, und einem Oxyethylengehalt von wenigstens 75 Gew.-%, bezogen auf die

Gesamtzahl der Oxyalkylengruppen im Blockmischpolymerisat, verwendet.

Die DE-OS 11 78 595 betrifft die Verwendung eines Stabilisatorgemisches, bestehend aus einem Polyoxyalkylen-Polysiloxan-Blockmischpolymerisat und dem Alkalisalz eines Rizinusölsulfats. Zum Stand der Technik können ferner die DE-OS 23 48 929, die US-PS 4 088 615 und die US-PS 4 331 555 genannt werden.

Mit den Stabilisatorgemischen des Standes der Technik ist man grundsätzlich in der Lage, über einen weiten Raumgewichtsbereich gleichmäßig feinzellige Polyesterpolyurethanschäume mit ausreichender Offenzelligkeit herzustellen. Ein Nachteil dieser Schäume besteht jedoch in der unzureichenden Stanzbarkeit, welche dadurch gegeben ist, daß beim Stanzen von Formlingen aus dem Polyesterpolyurethanschaumkörper die Kanten verkleben.

Man hat bereits versucht, die Stanzbarkeit derartiger Schaumstoffe durch Zusatz von Paraffinölen oder niedermolekularen Polyolen, wie z.B. in der US-PS 4 088 615 beschrieben, zu verbessern. Dies erfordert jedoch wiederum eine zusätzliche Anpassung, also Änderung der Verschäumungsrezeptur. Außerdem werden durch derartige Zusatzstoffe andere physikalische Eigenschaften der Schäume beeinflußt.

Der Erfindung liegt deshalb die Aufgabe zugrunde, für die Herstellung flexibler Polyesterpolyurethanschäume eine universell verwendbare Stabilisatormischung zu finden, die die Vorzüge des organischen Tensids mit denen des Polyoxyalkylen-Polysiloxan-Blockmischpolymerisats vereint. Die unzureichende Stanzbarkeit der Schäume soll wesentlich verbessert werden, ohne daß die zuvor beschriebenen Nachteile auftreten. Gleichzeitig sollen die Schäume einen besonders hohen Grad an Offenzelligkeit zeigen, der über das Maß der Offenzelligkeit, die mit den bisherigen Stabilisatorgemischen zu erreichen war, hinausgeht.

Überraschenderweise kann diese Aufgabe erfindungsgemäß dadurch gelöst werden, daß man ein Stabilisatorgemisch verwendet, welches aus

a) einem (Meth)allylpolyoxyalkylenetherpolymerisat oder dessen Copolymerisat mit Vinylmonomeren und
b) einem Polyoxyalkylen-Polysiloxan-Blockmischpolymerisat,

wobei das Gewichtsverhältnis von a : b = 1 : 9 bis 9 : 1 ist,
besteht.

Vorzugsweise ist das Gewichtsverhältnis von a : b = 3 : 1 bis 1 : 3.

Vorzugsweise verwendet man als Bestandteil a) ein Copolymerisat aus (Meth)allylpolyoxyalkylenethern und Vinylmonomeren, wie z.B. Vinylestern von Carbonsäuren.

Verfahren zur Herstellung der Komponente a) sind in der DE-PS 33 39 068 und der DE-OS 20 41 659 beschrieben.

Die Polyoxyalkylen-Polysiloxan-Blockmischpolymerisate können geradkettig oder verzweigt sein oder eine kammartige Struktur aufweisen. Die Polyoxyalkylenblöcke sind dabei an das Polysiloxangerüst über eine SiC- oder SiOC-Bindung gebunden. Derartige Blockmischpolymerisate sind aus dem Stand der Technik dem mit der Herstellung von Polyurethanschäumen vertrauten Fachmann bekannt.

Vorzugsweise verwendet man ein Stabilisatorengemisch, dessen Komponente a) durch Polymerisation von Verbindungen der allgemeinen Formel

$$CH_2{=}\overset{\overset{\Large R^1}{|}}{C}{-}CH_2O{-}(C_nH_{2n}O{-})_mR^2 \qquad I$$

oder durch Copolymerisation dieser Verbindungen mit bis zu 90 Mol-% Vinylverbindungen der allgemeinen Formel

$$CH_2{=}\overset{\overset{\Large R^4}{|}}{C}R^1 \qquad II$$

wobei

$R^1$ ein Wasserstoff- oder Methylrest ist,

$R^2$ ein Wasserstoffrest oder ein Kohlenwasserstoffrest mit 1 bis 8 Kohlenstoffatomen oder die Gruppe

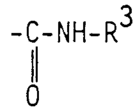

oder

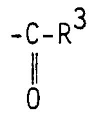

ist, in der $R^3$ ein Kohlenwasserstoffrest mit 1 bis 8 Kohlenstoffatomen ist,

$R^4$ der Rest

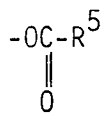 , 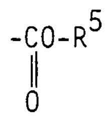 oder 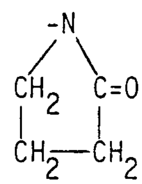

ist, in der $R^5$ ein Alkylrest mit 1 bis 18 Kohlenstoffatomen ist,

n im durchschnittlichen Polymerenmolekül einen Wert von 2 bis 3 und absolut Zahlenwerte von 2, 3 oder 4 hat,

m im durchschnittlichen Polymerenmolekül einen Wert von 1 bis 100 hat,

erhältlich ist.

Besonders bevorzugt verwendet man Polymerisate, bei denen der Rest $R^1$ ein Wasserstoffrest ist. $R^2$ ist vorzugsweise ein Kohlenwasserstoffrest mit 1 bis 4 Kohlenstoffatomen.

Der Rest $R^4$ hat vorzugsweise die Bedeutung des Restes

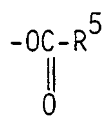

oder

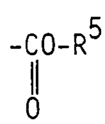 ,

wobei $R^5$ insbesondere ein Methyl- oder Ethylrest ist.

n hat im durchschnittlichen Polymerenmolekül einen Wert von 2 bis 3 und hat vorzugsweise einen Wert von 2,2 bis 2,8. Die absoluten Zahlenwerte von n sind 2, 3 oder 4. Bevorzugt sind Oxyalkylenreste mit n = 2 und n = 3, d.h. Oxyethylen- und Oxypropylenreste.

m hat im durchschnittlichen Molekül einen Wert von 1 bis 100, vorzugsweise 10 bis 70.

Es ist weiterhin bevorzugt, als Komponente b) ein Blockmischpolymerisat der allgemeinen Formel

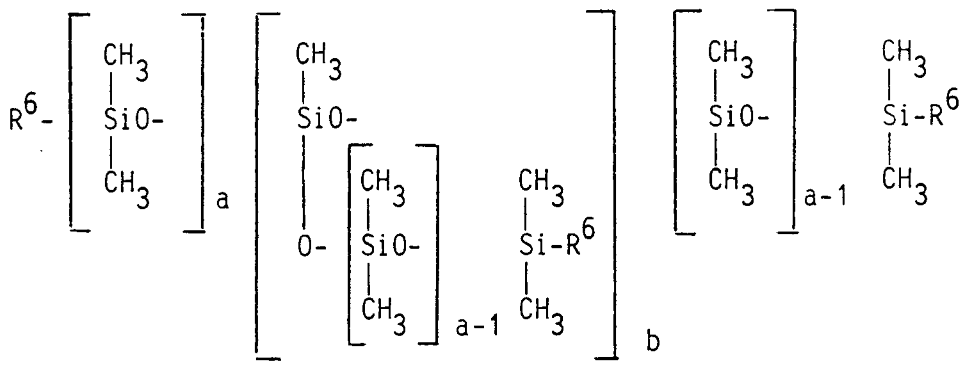

III

oder der allgemeinen Formel

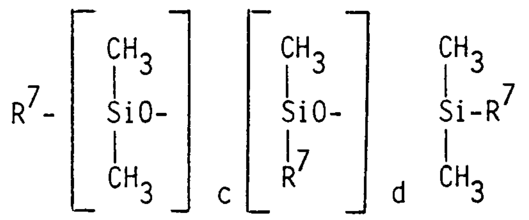

IV

zu verwenden, wobei

- $R^6$ ein Methylrest oder ein Polyetherrest der durchschnittlichen Formel $-O(C_xH_{2x}O-)_yR^8$ ist, in dem
- x im durchschnittlichen Polymerenmolekül einen Wert von 2 bis 3 und absolut Zahlenwerte von 2, 3 oder 4 hat,
- y im durchschnittlichen Polymerenmolekül einen Wert von 5 bis 50 hat und
- $R^8$ ein Wasserstoff- oder Alkylrest mit 1 bis 6 Kohlenstoffatomen ist,
- $R^7$ ein Methylrest oder ein Polyetherrest der allgemeinen, durchschnittlichen Formel $-(CH_2)_3O-(C_pH_{2p}O-)_qR^9$ ist, in dem
- p im durchschnittlichen Polymerenmolekül einen Wert von 2 bis 3 und absolut Zahlenwerte von 2, 3 oder 4 hat,
- q im durchschnittlichen Polymerenmolekül einen Wert von 5 bis 50 hat und
- $R^9$ ein Wasserstoff- oder Alkylrest mit 1 bis 6 Kohlenstoffatomen ist,

mit der Maßgabe, daß im durchschnittlichen Polymerenmolekül mindestens 1 Rest $R^6$ bzw. $R^7$ ein Polyetherrest sein muß,

- a im durchschnittlichen Polymerenmolekül einen Wert von 1 bis 50,
- b im durchschnittlichen Polymerenmolekül einen Wert von 0 bis 10,
- c im durchschnittlichen Polymerenmolekül einen Wert von 2 bis 50,
- d im durchschnittlichen Polymerenmolekül einen Wert von 2 bis 40 hat.

$R^8$ und $R^9$ sind vorzugsweise Alkylreste mit 1 bis 4 Kohlenstoffatomen.

x hat im durchschnittlichen Polymerenmolekül einen Wert von 2 bis 3, vorzugsweise von 2,0 bis 2,7. Absolut hat x jeweils einen Zahlenwert von 2, 3 oder 4, wobei 2 oder 3 bevorzugt ist. Entsprechendes gilt für den Index p.

Der Index y bzw. q hat im durchschnittlichen Polymerenmolekül einen Wert von 5 bis 50, vorzugsweise von 8 bis 40.

Es muß dabei die Bedingung eingehalten werden, daß im durchschnittlichen Polymerenmolekül mindestens 1 Rest $R^6$ bzw. $R^7$ ein Polyetherrest sein muß. Vorzugsweise sind im durchschnittlichen Polymerenmolekül 2 bis 30 Polyetherreste an das Polysiloxangerüst gebunden, wobei die Polyetherreste gleich oder verschieden sein können.

a hat im durchschnittlichen Polymerenmolekül vorzugsweise einen Wert von 2 bis 20, b hat im durchschnittlichen Polymerenmolekül vorzugsweise einen Wert von 0 bis 2, c hat im durchschnittlichen Polymerenmolekül vorzugsweise einen Wert von 2 bis 25, d hat im durchschnittlichen Polymerenmolekül vorzugsweise einen Wert von 2 bis 25.

In der Praxis wird das Stabilisatorgemisch zusammen mit dem Katalysator in dem zur Aufschäumung benötigten Wasser gelöst. Zur Verbesserung der Wasserlöslichkeit ist es häufig von Vorteil, dieser Zusammensetzung ein Solubilisierungsmittel in wirksamen Mengen zuzusetzen. Beispiele solcher Solubilisierungsmittel sind Alkylphenylpolyoxyalkylenether oder Alkylpolyoxyalkylenether. Diese werden in Abhängigkeit vom verwendeten Katalysator in Mengen von 5 bis 70 Gew.-%, bezogen auf das Stabilisatorgemisch, zugesetzt. Die unter Verwendung der erfindungsgemäßen Stabilisatorgemische hergestellten flexiblen Polyesterpolyurethanschäume weisen einen hohen Grad an Offenzelligkeit auf. Sie zeigen eine hervorragende Stanzbarkeit, ohne daß anwendungstechnisch nachteilige Verklebungen, insbesondere im Kantenbereich auftreten.

Das erfindungsgemäße Verfahren und die Eigenschaften der bei dem Verfahren hergestellten Schäume werden anhand der folgenden Beispiele noch näher erläutert.

Hierbei werden folgende Produkte und Bezeichnungen verwendet:

| | |
|---|---|
| Desmophen®2200 : | handelsübliches Polyesterpolyol zur Herstellung flexibler Polyesterpolyurethanschäume, hergestellt aus Adipinsäure und Diethylenglykol sowie geringer Mengen an höherfunktionellen Alkoholen. Die Hydroxyzahl beträgt in der Regel 45 bis 65 bei einer Funktionalität von mindestens 2. |
| Desmodur®T 80 : | handelsübliches Toluylendiisocyanat, charakterisiert durch ein Isomerenverhältnis 2,4- zu 2,6- von 80 : 20. |
| Desmodur®T 65 : | handelsübliches Toluylendiisocyanat, charakterisiert durch ein Isomerenverhältnis 2,4- zu 2,6- von 65 : 35. |
| NMM : | N-Methylmorpholin. |
| DB : | N,N-Dimethylbenzylamin. |
| NP 9 : | ethoxylierter Nonylphenol mit durchschnittlich 9 Ethylenoxideinheiten. |
| EM / TX : | EM = nichtionisches Tensid auf der Basis von alkoxylierten Fettalkoholen,<br>TX = anionisches Tensid. |
| Tegostab®B 8300: | handelsüblicher Stabilisator für die Herstellung flexibler Polyesterpolyurethanschäume auf der Basis von Polyoxyalkylen-Polysiloxan-Blockmischpolymerisaten im Gemisch mit organischen Tensiden (Natriumdodecylsulfonat und NP 9). |
| Niax®L 532 : | handelsüblicher Stabilisator zur Herstellung flexibler Polyesterpolyurethanschäume auf der Basis von Polyoxyalkylen-Polysiloxan-Blockmischpolymerisaten im Gemisch mit organischen Tensiden. |
| Siloxan 1 : | Polyoxyalkylen-Polysiloxan-Blockmischpolymerisat gemäß der Formel IV, wobei $R^7$ (endständig) = ein Methylrest und $R^7$ (seitenständig) ein Polyetherrest ist. Dabei ist c = 9, d = 10, p = 2,1, q = 12 und $R^9$ = $-CH_3$, wobei p als absolute Zahlenwerte 2 und 3 annimmt. |
| Siloxan 2 : | Polyoxyalkylen-Polysiloxan-Blockmischpolymerisat der Formel III, wobei $R^6$ ein Polyetherrest ist. Dabei bedeutet a = 4, b = 0, x = 2,3, y = 37 und $R^8$ = -Butyl, wobei x als absolute Zahlenwerte 2 und 3 annimmt. |
| Siloxan 3 : | Polyoxyalkylen-Polysiloxan-Blockmischpolymerisat der Formel III, wobei $R^6$ ein Polyetherrest ist. Dabei bedeutet a = 1,5, b = 1, x = 2,6, y = 17 und $R^8$ = $-CH_3$, wobei x als absolute Zahlenwerte 2 und 3 annimmt. |
| Siloxan 4 : | Polyoxyalkylen-Polysiloxan-Blockmischpolymerisat der Formel IV, wobei $R^7$ ein Polyetherrest ist. Dabei bedeutet c = 19, d = 20, p = 2,6, q = 34 und $R^9$ = $-CH_3$, wobei p als absolute Zahlenwerte 2 und annimmt. |

Die Herstellung der Schaumstoffe erfolgte auf einer Hennecke-Hochdruckmaschine mit einem Maximalausstoß von 10 kg Polyesterpolyol/min entsprechend dem Stand der Technik. Die flüssige Reaktionsmischung wurde direkt aus dem Mischkopf in einen oben offenen Behälter der Abmessung 30 cm x 30 cm x 30 cm geschäumt, so daß der Schaum frei aufsteigen konnte. Die Isocyanatmenge betrug bei den Versuchen 90 bis 110 % der erforderlichen Menge für die Umsetzung mit dem Polyester und dem im Reaktionsgemisch vorliegenden Wasser, ausgedrückt durch einen Index (〈 〉) von 90 bis 110. Der bevorzugte Index betrug 〈100〉.

Die Bestimmung der physikalischen Eigenschaften des Schaumes erfolgte nach 72stündiger Lagerung im Normklima, d. h. 23 ± 1 ° C und 50 ± 2 % relative Luftfeuchtigkeit.

Es wurden die folgenden Eigenschaften bestimmt:

1. Luftdurchlässigkeit (Offenzelligkeit):

Darunter versteht man den Rückstau in einer Wassersäule, welcher entsteht, wenn ein gleichmäßiger Luftstrom von 8 l/min durch den Schaumkörper geleitet wird. Niedrige Werte bedeuten gute Luftdurchlässigkeit und damit eine gute Offenzelligkeit. Hohe Werte entsprechen dagegen einer hohen Anzahl geschlossener Zellen.

2. Zellstruktur:

Diese kann zwischen fein bis grob und regelmäßig bis unregelmäßig variieren und wird visuell beurteilt. Angestrebt wird eine möglichst feine und gleichzeitig regelmäßige Zelle.

3. Stanzbarkeit:

Hierbei werden Probekörper gemäß DIN 53571 ausgestanzt und visuell von sehr gut bis sehr schlecht beurteilt. Sehr gut bedeutet, daß der Probekörper direkt nach dem Stanzvorgang absolut kein Verkleben der Kanten aufweist, wohingegen bei einem sehr schlechten Stanzverhalten die Kanten des Probekörpers auf Dauer irreversibel verklebt bleiben.

Neue Tabelle 1

Formulierungen

| | Bsp. 1 | Bsp. 2 | Bsp. 3a | Bsp. 3b | Bsp. 4a-j | Bsp. 5 | Bsp. 6 | Bsp. 7a | Bsp. 7b | Bsp.8k-t |
|---|---|---|---|---|---|---|---|---|---|---|
| Desmophen® 2200 | 100 | 100 | 100 | 100 | 100 | 100 | 100 | 100 | 100 | 100 |
| Wasser | 3,6 | 3,6 | 3,6 | 3,6 | 3,6 | 5,0 | 5,0 | 5,0 | 5,0 | 5,0 |
| NMM | 1,5 | 1,5 | 1,5 | 1,5 | 1,5 | - | - | - | - | - |
| DB | - | - | - | - | - | 1,5 | 1,5 | 1,5 | 1,5 | 1,5 |
| Desmodur® T 80 | 44,8 | 44,8 | 44,8 | 44,8 | 44,8 | 40,8 | 40,8 | 40,8 | 40,8 | 40,8 |
| Desmodur® T 65 | - | - | - | - | - | 17,5 | 17,5 | 17,5 | 17,5 | 17,5 |
| Tegostab® B 8300 | 1,0 | - | - | - | - | 1,0 | - | - | - | - |
| Niax® L 532 | - | 1,0 | - | - | - | - | 1,0 | - | - | - |
| EM / TX (1 : 1) | - | - | 1,0 | 2,0 | - | - | - | 2,0 | 4,0 | - |
| Stabilisatorgemisch gemäß Tabelle 3 | - | - | - | - | 1,0 | - | - | - | - | 1,0 |

Bei den Angaben handelt es sich um Gew.-Teile.

Der Index beträgt bei den Beispielen 1 bis 8 jeweils 100 (= Molverhältnis Isocyanatgruppen : OH-Gruppen = 1).

Tabelle 2

In den Verschäumungsbeispielen 4a - j und 8k - t verwendete Polymere (entspr. Bestandteil a))

| | (Meth)allylpolyoxyalkylenether (A) $CH_2=CR^1-CH_2-O-(C_nH_{2n}O)_m-R^2$ | | | | | Vinylverbindung (B) $CH_2=CR^1-R^4$ | | | A : B |
|---|---|---|---|---|---|---|---|---|---|
| Nr. | $R^1$ | $R^2$ | $R^3$ | n | m | $R^1$ | $R^4$ | $R^5$ | (Mol) |
| P- 1 | H | $CH_3$ | - | 2,5 | 40 | - | - | - | - |
| P- 2 | $CH_3$ | $CH_3$ | - | 2,5 | 40 | - | - | - | - |
| P- 3 | H | $CH_3$ | - | 2,5 | 40 | H | $-O-CO-R^5$ | $CH_3$ | 1 : 3 |
| P- 4 | $CH_3$ | $CH_3$ | - | 2,5 | 40 | H | $-O-CO-R^5$ | $CH_3$ | 1 : 3 |
| P- 5 | H | $CH_3$ | - | 2,5 | 40 | H | $-COO-R^5$ | $C_4H_9$ | 1 : 2 |
| P- 6 | H | $CH_3$ | - | 2,5 | 40 | $CH_3$ | $-COO-R^5$ | $CH_3$ | 1 : 2 |
| P- 7 | H | $CH_3$ | - | 2,5 | 40 | H | $-N-(CH_2)_3-C=O$ | - | 1 : 3 |
| P- 8 | H | H | - | 2,5 | 40 | H | $-O-CO-R^5$ | $CH_3$ | 1 : 3 |
| P- 9 | H | $C_4H_9$ | - | 2,5 | 40 | H | $-O-CO-R^5$ | $CH_3$ | 1 : 3 |
| P-10 | H | $-CO-R^3$ | $CH_3$ | 2,5 | 40 | H | $-O-CO-R^5$ | $CH_3$ | 1 : 3 |

Tabelle 2 - Fortsetzung

In den Verschäumungsbeispielen 4a - j und 8k - t verwendete Polymere (entspr. Bestandteil a))

| | (Meth)allylpolyoxyalkylenether (A) $CH_2=CR^1-CH_2-O-(C_nH_{2n}O)_m-R^2$ | | | | | Vinylverbindung (B) $CH_2=CR^1-R^4$ | | | A : B |
|---|---|---|---|---|---|---|---|---|---|
| Nr. | $R^1$ | $R^2$ | $R^3$ | n | m | $R^1$ | $R^4$ | $R^5$ | (Mol) |
| P-11 | H | $-CO-NH-R^3$ | $C_6H_5$ | 2,5 | 40 | H | $-O-CO-R^5$ | $CH_3$ | 1 : 3 |
| P-12 | H | $CH_3$ | - | 2,2 | 35 | H | $-O-CO-R^5$ | $CH_3$ | 1 : 2 |
| P-13 | H | $CH_3$ | - | 2,8 | 60 | H | $-O-CO-R^5$ | $CH_3$ | 1 : 3 |
| P-14 | H | $CH_3$ | - | 2,5 | 12 | H | $-O-CO-R^5$ | $CH_3$ | 3 : 1 |
| P-15 | H | $CH_3$ | - | 2,5 | 73 | H | $-O-CO-R^5$ | $CH_3$ | 1 : 5 |
| P-16 | H | $CH_3$ | - | 2,5 | 40 | H | $-O-CO-R^5$ | $CH_3$ | 1 : 1 |

Tabelle 3

| In den Verschäumungsbeispielen 4a - j und 8k - t verwendete Stabilisatorgemische, wobei das schließlich eingesetzte Stabilisatorgemisch zusätzlich 40 Gew.-% Solubilisator NP 9 enthält. | | | |
|---|---|---|---|
| Stab.-gemisch | Bestandteil a) (Tabelle 2) | Bestandteil b) | a) : b) (Gew.-%) |
| a | P - 1 | Si - 1 | 1 : 1 |
| b | P - 2 | Si - 1 | 1 : 1 |
| c | P - 3 | Si - 1 | 1 : 1 |
| d | P - 3 | Si - 2 | 1 : 1 |
| e | P - 3 | Si - 3 | 1 : 3 |
| f | P - 3 | Si - 4 | 3 : 1 |
| g | P - 4 | Si - 1 | 1 : 7 |
| h | P - 5 | Si - 1 | 1 : 1 |
| i | P - 6 | Si - 1 | 1 : 1 |
| j | P - 7 | Si - 1 | 1 : 1 |
| k | P - 8 | Si - 1 | 1 : 1 |
| l | P - 9 | Si - 1 | 6 : 1 |
| m | P - 10 | Si - 1 | 1 : 1 |
| n | P - 11 | Si - 1 | 1 : 1 |
| o | P - 12 | Si - 1 | 1 : 2 |
| p | P - 13 | Si - 1 | 1 : 1 |
| q | P - 14 | Si - 1 | 1 : 1 |
| r | P - 15 | Si - 1 | 1 : 1 |
| s | P - 16 | Si - 1 | 1 : 1 |
| t | P - 3 | - | - |

Tabelle 4

| Ergebnisse | | | |
|---|---|---|---|
| Beispiel | Luftdurchlässigkeit | Zellstruktur | Stanzbarkeit |
| 1 | 80 | fein, regelmäßig | sehr schlecht |
| 2 | 100 | fein, regelmäßig | sehr schlecht |
| 3a | Kollaps aufgrund mangelnder Stabilisierung | | |
| 3b | 250 | fein, regelmäßig | sehr gut |
| 4a | 50 | fein, regelmäßig | sehr gut |
| b | 50 | fein, regelmäßig | sehr gut |
| c | 10 | fein, regelmäßig | sehr gut |
| d | 10 | fein, regelmäßig | sehr gut |
| e | 25 | fein, regelmäßig | gut - befriedigend |
| f | 20 | fein, regelmäßig | gut - sehr gut |
| g | 10 | fein, regelmäßig | befriedigend |
| h | 25 | leicht vergröbert, regelmäßig | sehr gut |
| i | 25 | leicht vergröbert, regelmäßig | sehr gut |
| j | 50 | fein, regelmäßig | gut |

Die Beispiele 1 und 2 zeigen, daß bei Verwendung von handelsüblichen Stabilisatoren auf der Basis von Polyoxyalkylen-Polysiloxan-Blockmischpolymerisaten im Gemisch mit organischen Tensiden Schäume mit feiner und regelmäßiger Zellstruktur erhalten werden, welche bei mittlerer Luftdurchlässigkeit eine sehr schlechte Stanzbarkeit aufweisen.

Beispiel 3 b zeigt, daß durch Verwendung von rein organischen Tensiden Schäume mit feiner und regelmäßiger Zellstruktur resultieren, welche bei noch ausreichender Offenzelligkeit sehr gut stanzbar sind. Die gerade noch akzeptable Luftdurchlässigkeit beweist, daß in Formulierungen mit niedrigerem Wassergehalt (hohe Raumgewichte) Schaumstoffe ohne Schrumpfen nicht hergestellt werden können.

Die geringe stabilisierende Wirkung der organischen Tenside erfordert eine erhöhte Einsatzkonzentration. Beispiel 3a zeigt demgemäß, daß bei geringer Zusatzmenge es zum Kollabieren der Schäume kommt.

Die Beispiele 4a - j belegen, daß es bei der Verwendung des erfindungsgemäßen Stabilisatorgemisches möglich ist, bei feiner und regelmäßiger Zellstruktur Schäume mit hervorragender Stanzbarkeit herzustellen, wobei gleichzeitig die geforderte gute Stabilisierung gegeben ist. Darüber hinaus weisen die Schäume eine außergewöhnliche Offenzelligkeit auf) die über das Maß der Luftdurchlässigkeit der Vergleichsschäume hinausgeht.

Tabelle 5

| Bsp. | Luftdurchlässigkeit | Zellstruktur | Stanzbarkeit |
|---|---|---|---|
| 5 | 40 | fein, regelmäßig | sehr schlecht |
| 6 | 60 | leicht vergröbert, regelmäßig | sehr schlecht |
| 7a | Kollaps aufgrund mangelnder Stabilisierung | | |
| 7b | 180 | vergröbert, unregelmäßig | sehr gut |
| 8k | 10 | fein, regelmäßig | gut - befriedigend |
| l | 10 | leicht vergröbert, regelmäßig | sehr gut |
| m | 10 | fein, regelmäßig | sehr gut |
| n | 20 | fein, regelmäßig | gut - befriedigend |
| o | 10 | fein, regelmäßig | sehr gut |
| p | 20 | fein, regelmäßig | gut - befriedigend |
| q | 20 | fein, leicht unregelmäßig | gut |
| r | 10 | fein, regelmäßig | befriedigend |
| s | 10 | fein, regelmäßig | sehr gut |
| t | 20 | vergröbert, unregelmäßig | sehr gut |

Die Beispiele 7a und 7b zeigen, daß nur durch sehr hohe Konzentrationen an organischen Tensiden in Formulierungen mit erhöhtem Wassergehalt (niedrigeres Raumgewicht) stabile Schäume herstellbar sind. Demgemäß ist mit ihnen die Herstellung von Polyesterurethanschäumen mit noch niedrigerem Raumgewicht nahezu unmöglich.

Die Beispiele 8k - s belegen, daß durch das erfindungsgemäße Stabilisatorgemisch sehr gut stanzbare Schäume bei gleichzeitig sehr guter Stabilisierung (niedrige Einsatzkonzentration) hergestellt werden können. Selbst bei erhöhten Wassergehalten werden demgemäß die Vorzüge des organischen Tensids (Bsp. 7b : Stanzbarkeit) mit denen des Polyoxyalkylen-Polysiloxan-Blockmischpolymerisats (Bsp. 5, 6 : Zellstruktur, Stabilisierung) vereint.

Auch hier erhält man bei Einsatz des erfindungsgemäßen Stabilisatorgemisches Schäume, deren außergewöhnlich hohe Offenzelligkeit weit über die der Vergleichsschäume hinausgeht.

## Patentansprüche

**1.** Verfahren zur Herstellung von flexiblen Polyesterpolyurethanschäumen durch Umsetzung von mindestens difunktionellen Polyesterolen mit mindestens difunktionellen organischen Isocyanaten in Gegenwart von Katalysatoren und eines Stabilisatorgemisches aus organischen und siliciumorganischen Verbindungen, Wasser, gegebenenfalls Treibmitteln und gegebenenfalls üblichen Zusatzmitteln, dadurch gekennzeichnet, daß man ein Stabilisatorgemisch verwendet, welches aus

a) einem (Meth)allylpolyoxyalkylenetherpolymerisat oder dessen Copolymerisat mit Vinylmonomeren und

b) einem Polyoxyalkylen-Polysiloxan-Blockmischpolymerisat,

wobei das Gewichtsverhältnis von a : b = 1 : 9 bis 9 : 1 ist,

besteht.

**2.** Verfahren nach Anspruch 1, dadurch gekennzeichnet, daß man ein Stabilisatorgemisch verwendet, dessen Gewichtsverhältnis a : b = 1 : 3 bis 3 : 1 ist.

**3.** Verfahren nach Anspruch 1 oder 2, dadurch gekennzeichnet, daß man ein Stabilisatorgemisch verwendet, dessen Komponente a) durch Polymerisation von Verbindungen der allgemeinen Formel

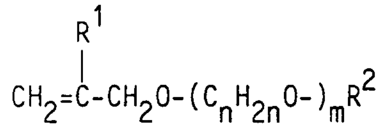

oder durch Copolymerisation dieser Verbindungen mit bis zu 90 Mol-% Vinylmonomeren der allgemeinen Formel

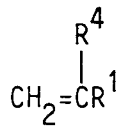

wobei

$R^1$ ein Wasserstoff- oder Methylrest ist,

$R^2$ ein Wasserstoffrest oder ein Kohlenwasserstoffrest mit 1 bis 8 Kohlenstoffatomen oder die Gruppe

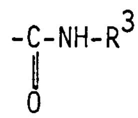

oder

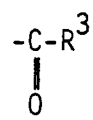

ist, in der $R^3$ ein Kohlenwasserstoffrest mit 1 bis 8 Kohlenstoffatomen ist,

$R^4$ der Rest

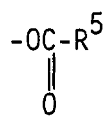 , 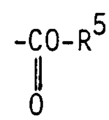

oder

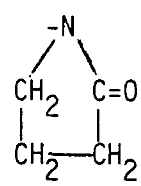

ist, in der $R^5$ ein Alkylrest mit 1 bis 18 Kohlenstoffatomen ist,

n im durchschnittlichen Polymerenmolekül einen Wert von 2 bis 3 und absolut Zahlenwerte von

2, 3 oder 4 hat,

m im durchschnittlichen Polymerenmolekül einen Wert von 1 bis 100 hat,

erhältlich ist.

**4.** Verfahren nach Anspruch 3, dadurch gekennzeichnet, daß man ein Stabilisatorgemisch mit einer Komponente a) verwendet, deren Reste und Indices folgende Bedeutung haben:

$R^1$ = H,

$R^2$ = Kohlenwasserstoffrest mit 1 bis 4 Kohlenstoffatomen,

$R^4$ =

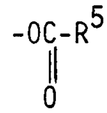

oder

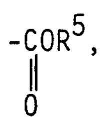

wobei $R^5$ ein Methyl- oder Ethylrest ist,

n = absoluter Wert 2 und 3, durchschnittlicher Wert 2,2 bis 2,8,

m = durchschnittlicher Wert 10 bis 70.

**5.** Verfahren nach Anspruch 1 oder 2, dadurch gekennzeichnet, daß man ein Stabilisatorgemisch verwendet, dessen Komponente b) ein Blockmischpolymerisat der allgemeinen Formel

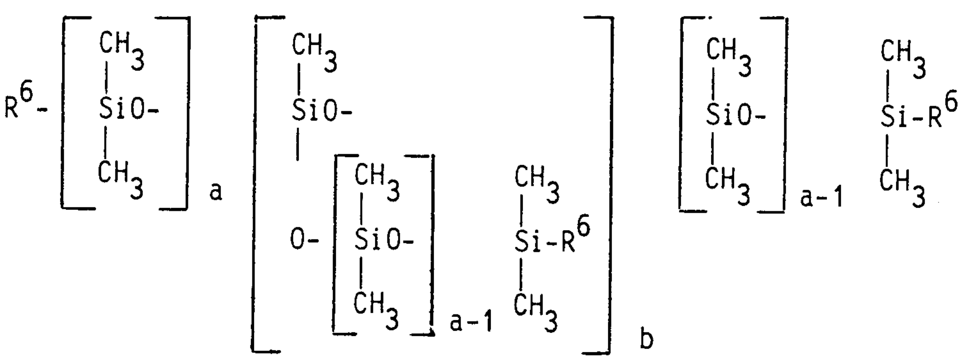

oder der allgemeinen Formel

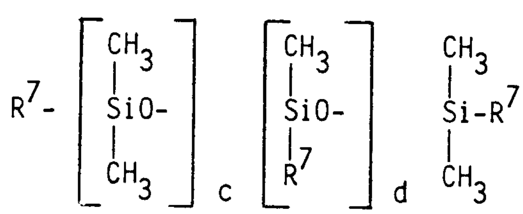

ist, wobei

$R^6$ ein Methylrest oder ein Polyetherrest der durchschnittlichen Formel $-O-(C_xH_{2x}O-)_yR^8$ ist, in dem

x im durchschnittlichen Polymerenmolekül einen Wert von 2 bis 3 und absolut Zahlenwerte von 2, 3 oder 4 hat,

y im durchschnittlichen Polymerenmolekül einen Wert von 5 bis hat und

$R^8$ ein Wasserstoff- oder Alkylrest mit 1 bis 6 Kohlenstoffatomen ist,

$R^7$ ein Methylrest oder ein Polyetherrest der allgemeinen, durchschnittlichen Formel $-(CH_2)_3O-(C_pH_{2p}O-)_qR^9$ ist, in dem

p im durchschnittlichen Polymerenmolekül einen Wert von 2 bis 3 und absolut Zahlenwerte von 2, 3 oder 4 hat,

q im durchschnittlichen Polymerenmolekül einen Wert von 5 bis 50 hat und

$R^9$ ein Wasserstoff- oder Alkylrest mit 1 bis 6 Kohlenstoffatomen ist,

mit der Maßgabe, daß im durchschnittlichen Polymerenmolekül mindestens 1 Rest $R^6$ bzw. $R^7$ ein Polyetherrest sein muß,

a im durchschnittlichen Polymerenmolekül einen Wert von 1 bis 50,

b im durchschnittlichen Polymerenmolekül einen Wert von 0 bis 10,

c im durchschnittlichen Polymerenmolekül einen Wert von 2 bis 50,

d im durchschnittlichen Polymerenmolekül einen Wert von 2 bis 40 hat.

**6.** Verfahren nach Anspruch 5, dadurch gekennzeichnet, daß man ein Stabilisatorgemisch mit einer Komponente b) verwendet, deren Reste und Indices folgende Bedeutung haben:

$R^8$, $R^9$ = Alkylrest mit 1 bis 4 Kohlenstoffatomen,
a = durchschnittlicher Wert 2 bis 20,
b = durchschnittlicher Wert 0 bis 2,
c = durchschnittlicher Wert 2 bis 25,
d = durchschnittlicher Wert 2 bis 25,
x, p = absoluter Wert 2 und 3,
durchschnittlicher Wert 2,0 bis 2,7,
y, q = durchschnittlicher Wert 8 bis 40.

**7.** Verfahren nach einem oder mehreren der Ansprüche 1 bis 6, dadurch gekennzeichnet, daß man ein Stabilisatorgemisch verwendet, welches Alkylphenylpolyoxyalkylenether oder Alkylpolyoxyalkylenether als Solubilisierungsmittel in Mengen von 5 bis 70 Gew.-%, bezogen auf das Stabilisatorgemisch, enthält.

## Claims

**1.** Process for the production of flexible polyester-polyurethane foams by reacting at least difunctional polyesterols with at least difunctional organic isocyanates in the presence of catalysts and in the presence of a stabilizer mixture comprising organic and organosilicon compounds, water, optionally blowing agents and optionally conventional additives, characterized in that a stabilizer mixture is used which comprises

a) a (meth)allylpolyoxyalkylene ether polymer or a copolymer thereof with vinyl monomers, and

b) a polyoxyalkylene polysiloxane block copolymer,

where the a : b weight ratio is from 1 : 9 to 9 : 1.

**2.** Process according to Claim 1, characterized in that a stabilizer mixture is used whose a : b weight ratio is from 1 : 3 to 3 : 1.

**3.** Process according to Claim 1 or 2, characterized in that a stabilizer mixture is used whose component a) is obtainable by polymerization of compounds of the general formula

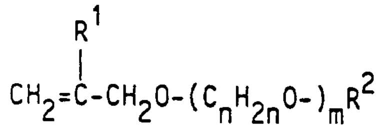

or by copolymerization of these compounds with up to 90 mol% of vinyl monomers of the general formula

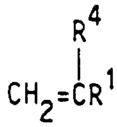

where

$R^1$ is a hydrogen or methyl radical,

$R^2$ is a hydrogen radical or a hydrocarbon radical having 1 to 8 carbon atoms or the

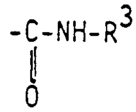

or

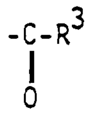

group, in which $R^3$ is a hydrocarbon radical having 1 to 8 carbon atoms,

$R^4$ is the

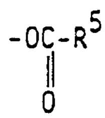,
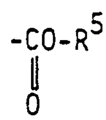

or

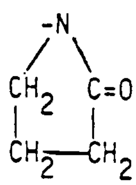

radical in which $R^5$ is an alkyl radical having 1 to 18 carbon atoms,

n in the average polymer molecule has a value of from 2 to 3 and absolute numerical values of 2, 3 or 4, and

m in the average polymer molecule has a value of from 1 to 100.

**4.** Process according to Claim 3, characterized in that a stabilizer mixture is used containing a component a) whose radicals and indices have the following meanings:

$R^1$ = H,

$R^2$ = hydrocarbon radical having 1 to 4 carbon atoms,

$R^4$ =

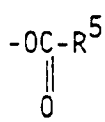

or

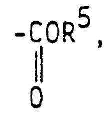

where $R^5$ is a methyl or ethyl radical,

n = absolute value 2 or 3, average value from 2.2 to 2.8,

m = average value from 10 to 70.

**5.** Process according to Claim 1 or 2, characterized in that a stabilizer mixture is used whose component b) is a block copolymer of the general formula

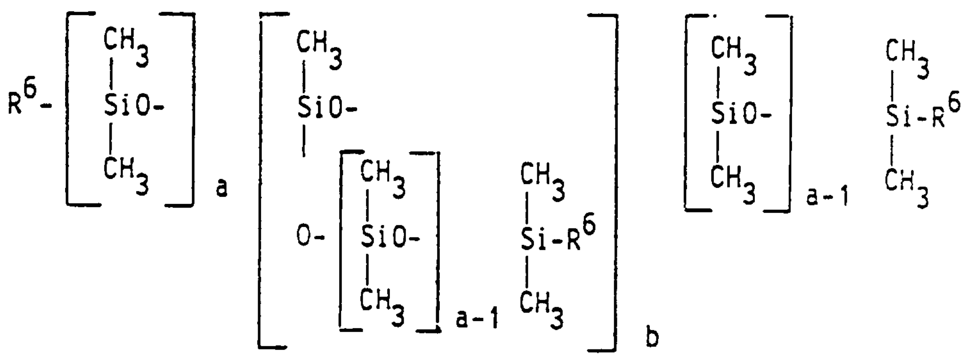

or of the general formula

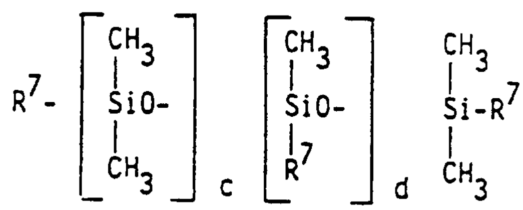

where

$R^6$ is a methyl radical or a polyether radical of the average formula $-O-(C_xH_{2x}O-)_yR^8$, in which

x in the average polymer molecule has a value of from 2 to 3 and absolute numerical values of 2, 3 or 4,

y in the average polymer molecule has a value of from 5 to 50, and

$R^8$ is a hydrogen or alkyl radical having 1 to 6 carbon atoms,

$R^7$ is a methyl radical or a polyether radical of the general, average formula $-(CH_2)_3O-(C_pH_{2p}O-)_qR^9$, in which

p in the average polymer molecule has a value of from 2 to 3 and absolute numerical values of 2, 3 or 4,

q in the average polymer molecule has a value of from 5 to 50, and

$R^9$ is a hydrogen or alkyl radical having 1 to 6 carbon atoms,

with the proviso that, in the average polymer molecule, at least 1 radical $R^6$ or $R^7$ must be a polyether radical,

a in the average polymer molecule has a value of from 1 to 50,

b in the average polymer molecule has a value of from 0 to 10,

c in the average polymer molecule has a value of from 2 to 50,

d in the average polymer molecule has a value of from 2 to 40.

6. Process according to Claim 5, characterized in that a stabilizer mixture is used containing a component b) whose radicals and indices have the following meanings:

| | |
|---|---|
| $R^8$ and $R^9$ | = alkyl radical having 1 to 4 carbon atoms, |
| a | = average value of from 2 to 20, |
| b | = average value of from 0 to 2, |
| c | = average value of from 2 to 25, |
| d | = average value of from 2 to 25, |
| x and p | = absolute value of 2 or 3,<br>average value of from 2.0 to 2.7, |
| y and q | = average value of from 8 to 40. |

7. Process according to one or more of Claims 1 to 6, characterized in that a stabilizer mixture is used which contains alkylphenylpolyoxyalkylene ethers or alkylpolyoxyalkylene ethers as solubilizers in amounts of from 5 to 70 % by weight, based on the stabilizer mixture.

**Revendications**

1. Procédé de préparation de mousses souples de polyesterpolyuréthane par réaction de polyestérols au moins bifonctionnels et d'isocyanates organigues au moins bifonctionnels, en présence de catalyseurs et d'un mélange de stabilisateurs formé de composés organiques et de composés organosiliciés, d'eau, éventuellement d'agents gonflants et éventuellement d'additifs usuels, caractérisé en ce qu'on utilise un mélange de stabilisateurs formé de :
   a) un polymère d'éther de (méth)allylpolyoxyalkylène ou un copolymère de celui-ci avec des monomères vinyliques, et
   b) un copolymère séquencé de polyoxyalkylène-polysiloxane,
   le rapport pondéral de a : b valant de 1 : 9 à 9 : 1.

2. Procédé selon la revendication 1, caractérisé en ce qu'on utilise un mélange de stabilisateurs dont le rapport pondéral de a : b vaut de 1 : 3 à 3 : 1.

3. Procédé selon la revendication 1 ou 2, caractérisé en ce qu'on utilise un mélange de stabilisateurs dont le composant a) est obtenu par polymérisation de composés répondant à la formule générale

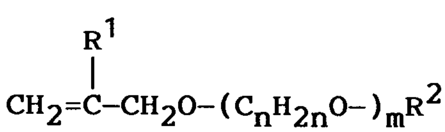

ou par copolymérisation de ces composés avec jusqu'à 90 % en moles de monomères vinyliques répondant à la formule générale

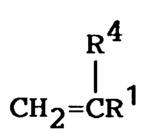

où

| | |
|---|---|
| $R^1$ | est un atome d'hydrogène ou un groupe méthyle, |
| $R^2$ | est un atome d'hydrogène ou un groupe hydrocarboné ayant de 1 à 8 atomes de carbone, ou le groupe |

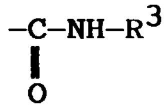

ou

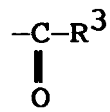,

où $R^3$ est un groupe hydrocarboné ayant de 1 à 8 atomes de carbone,

$R^4$ est le groupe

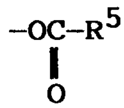, 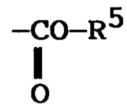

ou

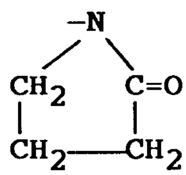

où $R^5$ est un groupe alkyle ayant de 1 à 18 atomes de carbone,

n a une valeur de 2 à 3 dans la molécule moyenne du polymère et une valeur absolue de 2, 3 ou 4, et

m a une valeur de 1 à 100 dans la molécule moyenne du polymère.

**4.** Procédé selon la revendication 3, caractérisé en ce qu'on utilise un mélange de stabilisateurs avec un composant a) dont les radicaux et les indices ont la signification suivante :

$R^1$ = H,

$R^2$ = un groupe hydrocarboné ayant de 1 à 4 atomes de carbone,

$R^4$ =

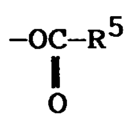

ou

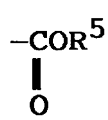,

où $R^5$ est un groupe méthyle ou éthyle,

n a une valeur absolue de 2 ou 3 et une valeur moyenne de 2,2 à 2,8,

m a une valeur moyenne de 10 à 70.

**5.** Procédé selon la revendication 1 ou 2, caractérisé en ce qu'on utilise un mélange de stabilisateurs dont le composant b) est un copolymère séquencé répondant à la formule générale :

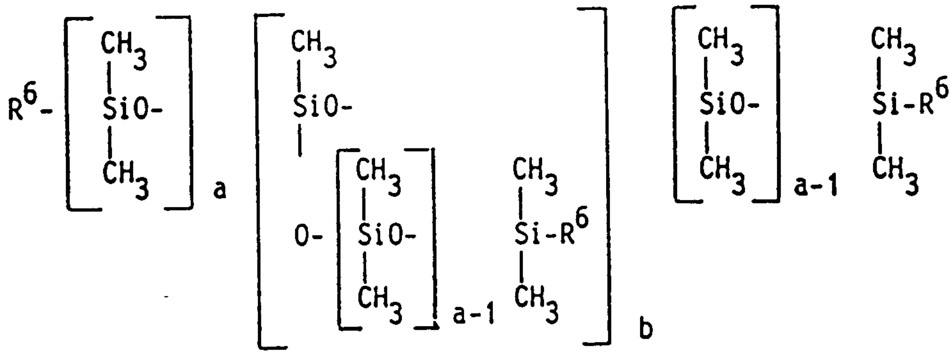

ou à la formule générale :

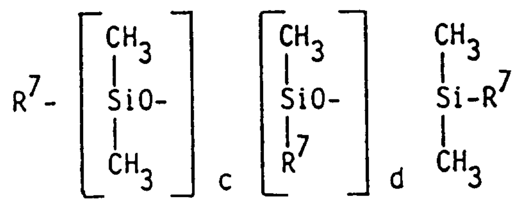

où

- $R^6$ est un groupe méthyle ou un groupe polyéther de formule moyenne $-O-(C_xH_{2x}O-)_yR^8$, dans laquelle
- x a une valeur de 2 à 3 dans la molécule moyenne du polymère et une valeur absolue de 2, 3 ou 4,
- y a une valeur de 5 à 50 dans la molécule moyenne du polymère, et
- $R^8$ est un atome d'hydrogène ou un groupe alkyle ayant de 1 à 6 atomes de carbone,
- $R^7$ est un groupe méthyle ou un groupe polyéther répondant à la formule générale moyenne $-(CH_2)_3O-(C_pH_{2p}O-)_qR^9$, dans laquelle
- p a une valeur de 2 à 3 dans la molécule moyenne du polymère et une valeur absolue de 2, 3 ou 4,
- q a une valeur de 5 à 50 dans la molécule moyenne du polymère, et
- $R^9$ est un atome d'hydrogène ou un groupe alkyle ayant de 1 à 6 atomes de carbone,

à la condition qu'au moins 1 radical $R^6$ ou $R^7$ soit un groupe polyéther dans la molécule moyenne du polymère,

- a a une valeur de 1 à 50 dans la molécule moyenne du polymère,
- b a une valeur de 0 à 10 dans la molécule moyenne du polymère,
- c a une valeur de 2 à 50 dans la molécule moyenne du polymère,
- d a une valeur de 2 à 40 dans la molécule moyenne du polymère.

**6.** Procédé selon la revendication 5, caractérisé en ce qu'on utilise un mélange de stabilisateurs avec un composant b) dont les radicaux et les indices ont la signification suivante :

- $R^8$, $R^9$ = un groupe alkyle ayant de 1 à 4 atomes de carbone,
- a = valeur moyenne de 2 à 20,
- b = valeur moyenne de 0 à 2,
- c = valeur moyenne de 2 à 25,
- d = valeur moyenne de 2 à 25,
- x, p = valeur absolue de 2 ou 3, valeur moyenne de 2,0 à 2,7,
- y, q = valeur moyenne de 8 à 40.

**7.** Procédé selon une ou plusieurs des revendications 1 à 6, caractérisé en ce qu'on utilise un mélange de stabilisateurs qui contient un éther d'alkylphénylpolyoxyalkylène ou un éther d'alkylpolyoxyalkylène, comme agent de solubilisation, en une quantité de 5 à 70 % en poids, par rapport au mélange de stabilisateurs.